**Europäisches Patentamt**

**European Patent Office**

**Office européen des brevets**

(19)

(11) Veröffentlichungsnummer : **0 149 725 B1**

(12) # EUROPÄISCHE PATENTSCHRIFT

(45) Veröffentlichungstag der Patentschrift :
**20.01.88**

(51) Int. Cl.⁴ : **G 09 F   9/35**

(21) Anmeldenummer : **84112350.8**

(22) Anmeldetag : **13.10.84**

(54) **Anzeigevorrichtung.**

(30) Priorität : **09.01.84 DE 3400438**

(43) Veröffentlichungstag der Anmeldung :
**31.07.85 Patentblatt 85/31**

(45) Bekanntmachung des Hinweises auf die Patenterteilung : **20.01.88 Patentblatt 88/03**

(84) Benannte Vertragsstaaten :
**DE FR GB NL SE**

(56) Entgegenhaltungen :
**DE-A- 2 159 165**
**DE-A- 2 854 175**
**DE-A- 3 140 907**
**DE-A- 3 233 299**
**DE-B- 2 823 845**
**GB-A- 1 559 556**

(73) Patentinhaber : **VDO Adolf Schindling AG**
**Gräfstrasse 103**
**D-6000 Frankfurt/Main (DE)**

(72) Erfinder : **Baeger, Holm, Dr. Dipl.-Phys.**
**Salzbornstrasse1**
**D-6231 Schwalbach (DE)**
Erfinder : **Wedel, Hans, Dr. Dipl.-Ing.**
**Im Wiesengrund 20**
**D-6109 Mühltal 4 (DE)**

(74) Vertreter : **Könekamp, Herbert, Dipl.-Ing.**
**Sodener Strasse 9**
**D-6231 Schwalbach (DE)**

## Beschreibung

Die Erfindung betrifft eine Anzeigevorrichtung zur Darstellung von veränderlichen und festen Informationen, insbesondere Flüssigkristallzelle, mit zwei zwischen sich eine Kammer bildenden Trägerplatten, wobei in der Kammer ein zwischen optisch verschiedenen Zuständen schaltbares Medium angeordnet ist, mit im Bereich der festen Informationen zwischen den Trägerplatten angeordneten transparenten Elementen sowie einer auf der einem Beobachter abgewandten Seite der Zelle angeordneten Lichtquelle, wobei die veränderlichen Informationen helle Informationen in dunklem Umfeld sind und die Beobachterseite der Zelle mit einer lichtundurchlässigen Schicht versehen ist, die im Bereich der festen und veränderlichen Informationen Aussparungen aufweist.

Bei derartigen bekannten Anzeigevorrichtungen sind Abstandshalter in der Form der festen Informationen und optisch gegen ihre Umgebung kontrastierend ausgebildet. Durch den Kontrast gegen die Umgebung erscheinen diese festen Informationen für einen Beobachter permanent sichtbar. Da diese Abstandshalter in einem anderen Arbeitsgang auf eine der Trägerplatten aufgebracht werden als bei einer Flüssigkristallzelle die Bildelektroden, kann es insbesondere bei feinen Strukturen der festen und veränderlichen Informationen aufgrund von Herstellungstoleranzen eine ungenaue Zuordnung zueinander kommen. Um dies zu vermeiden, muß ein hoher Herstellungsaufwand betrieben werden.

Aus der DE-A-31 40 907 ist eine Anzeigevorrichtung der eingangs genannten Art bekannt, wobei die Flüssigkristallschicht teilweise durch lichtdurchlässiges Material ersetzt ist, welches die Form der permanent anzuzeigenden Informationen besitzt. Diese Ausbildung führt zu einem ungleichmäßigen Leuchten der permanent anzuzeigenden Informationen.

Aufgabe der Erfindung ist es daher, eine Anzeigevorrichtung nach dem Oberbegriff zu schaffen, die auf einfache unkomplizierte Weise herstellbar ist und die festen Informationen gleichmäßig leuchten läßt.

Diese Aufgabe wird erfindungsgemäß dadurch gelöst, daß auf den der Kammer abgewandten Seiten der Trägerplatten Polarisatoren angeordnet sind und daß auf dem beobachterseitigen Polarisator der Zelle im Bereich der Aussparungen der festen Informationen eine eine Vergleichmäßigung des Leuchtens bewirkende transparente Schicht angeordnet ist. Durch diese Ausbildung wird auf einfache Weise die genaue Zuordnung von festen und veränderlichen Informationen zueinander dadurch erreicht, daß deren Konturen in einem Arbeitsgang durch das Aufbringen der lichtundurchlässigen — vorzugsweise schwarzen — Schicht und deren Ausnehmungen hergestellt werden. Die transparenten Elemente unterbrechen das optisch umschaltbare Medium in der Kammer, so daß bei Beleuchtung durch die Lichtquelle der dem Beobachter abgewandte Bereich der lichtundurchlässigen Schicht im Bereich der Aussparungen der festen Informationen beleuchtet wird, so daß diese festen Informationen — z. B. Skalen — leuchten, wobei durch die transparente Schicht eine Vergleichmäßigung des Leuchtens bewirkt wird.

Der Aussparungen der festen Informationen mit einer transparenten Schicht versehen sein. Ist dabei die transparente Schicht eine transflektive Schicht, so leuchten die festen Informationen auch bei ausgeschalteter Lichtquelle durch Auflicht von außen.

Sind im Bereich der festen Informationen eine Vielzahl transparenter Elemente geringer Größe angeordnet zwischen denen sich optisch schaltbares Medium befindet, so kann das optisch schaltbare Medium ohne Schwierigkeiten durch Evakuieren der Kammer in die Kammer eingebracht werden. Dazu besitzt die Anzeige an der einen Seite eine Einlaß- und an der anderen Seite eine Evakuierungsöffnung. Durch Anschließen der Evakuierungsöffnung an Vakuum und Eintauchen der Einlaßöffnung in optisch schaltbares Medium wie z. B. eine Flüssigkristallsubstanz wird dieses Medium in die Kammer eingesaugt. Sind eine Vielzahl oder auch kompliziert geformte transparente Elemente der festen Informationen vorhanden; ist eine einwandfreie vollständige Füllung der Kammer nur schwer bzw. sogar überhaupt nicht möglich. Die unterbrochene Struktur der transparenten Elemente der festen Informationen ermöglicht ein sicheres gleichmäßiges Füllen der Kammer in allen Bereichen. Damit wird eine einfache und trotzdem sichere Herstellung der Anzeigevorrichtung erreicht.

Eine Doppelfunktion der transparenten Elemente wird dadurch erreicht, daß die Elemente in Kleber eingebundene transparente Distanzelemente sind. Dadurch dienen sie nicht nur der Lichtübertragung sondern gleichzeitig zur Sicherung des korrekten Abstandes der beiden Trägerplatten zueinander. Dies ist insbesondere bei großflächigen Anzeigevorrichtungen wichtig, da ein unkorrekter Abstand in den Bereichen der veränderbaren Informationen sonst zu unsauberen, wie z. B. farbigen Darstellungen dieser Informationen führt.

Die Distanzelemente können vorzugsweise Kugeln oder Fasern aus Glas sein. Durch Variation der Anzahl der Distanzelemente kann auf einfache Weise auch eine Variation der Helligkeit erreicht werden, mit der die festen Informationen leuchten.

Insbesondere bei großflächigen Anzeigevorrichtungen mit großen inaktiven Flächen ist es von Vorteil, wenn die transparenten Distanzelemente außerhalb der Bereiche der veränderlichen Informationen in der ganzen Kammer verteilt angeordnet sind. Damit werden die Trägerplatten in großen Bereichen exakt auf Distanz gehalten, wobei kein zusätzlicher Arbeitsgang zur Herstellung einer Beleuchtung für die festen Informationen erforderlich ist und trotzdem eine einfache und sichere Füllung der Kammer mit optisch schaltbarem Medium gewährleistet ist.

Die transparenten Distanzelemente können dabei rasterartig über die Ebene der Kammer verteilt angeordnet sein, wobei dies auf einfache Weise dadurch erfolgt, daß die transparenten Distanzelemente in einem Druckverfahren auf eine der Trägerplatten aufgebracht sind.

Ein Ausführungsbeispiel der Erfindung ist in der Zeichnung dargestellt und wird im folgenden näher beschrieben. Es zeigen

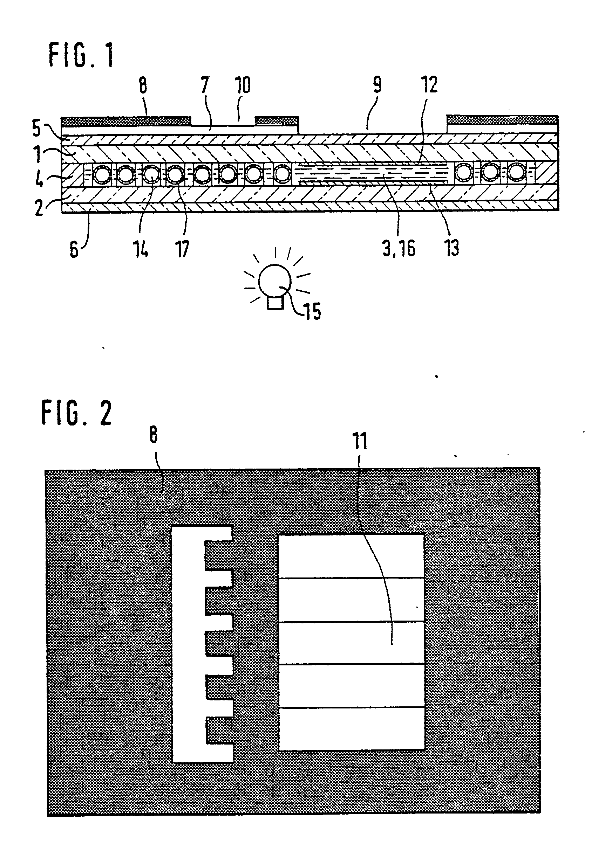

Figur 1 einen Querschnitt einer Anzeigevorrichtung,

Figur 2 eine Draufsicht der Anzeigevorrichtung nach Figur 1 von der Beobachterseite her.

Die dargestellte Anzeigevorrichtung ist eine Flüssigkristallzelle mit einer vorderen transparenten Trägerplatte 1 und einer hinteren transparenten Trägerplatte 2, die im Abstand zueinander angeordnet sind und zwischen sich eine mit einer Flüssigkristallsubstanz 16 gefüllte Kammer 3 bilden, die durch einen umlaufenden Rand 4 verschlossen ist.

Auf den der Kammer 3 abgewandten Seiten der Trägerplatten 1 und 2 sind Polarisatoren 5 und 6 aufgebracht. Der Polarisator 5 ist mit Ausnahme des Bereichs der veränderlichen Informationen mit einer transflektiven Schicht 7 versehen, die vorzugsweise weiß ist. Diese transflektive Schicht 7 ist wiederum durch eine lichtundurchlässige, vorzugsweise schwarze Schicht 8 bedeckt, welche im Bereich der veränderlichen Informationen eine Aussparung 9 aufweist. Weiterhin ist eine Aussparung 10 vorhanden, die die Konturen der festen Informationen — einer Skala — besitzt.

Die veränderliche Information ist durch einen Bargraph 11 gebildet, zu dessen optisch sichtbaren Ansteuerung in der Kammer 3 Elektroden 12 und 13 auf den Trägerplatten 1 und 2 angeordnet sind.

Mit Ausnahme des Bereichs der veränderlichen Informationen sind in den anderen Bereichen der Kammer 3 transparente Distanzelemente 14 gleichmäßig verteilt angeordnet, die in einen Kleber 17 eingebunden und so in ihrer Lage gehalten sind.

In den Bereichen außerhalb der festen Informationen dienen die Distanzelemente 14 nur zur Sicherung des exakten Abstandes der Trägerplatten 1 und 2 zueinander.

Im Bereich der festen Informationen dienen sie zusätzlich als Lichtleiter, die das Licht von einer auf der Rückseite der Flüssigkristallzelle angeordneten Lichtquelle 15 zur Aussparung 10 leiten und diese permanent beleuchten.

Der Bargraph 11 ist im nicht angesteuerten Zustand dunkel. Nur bei angesteuerten Elektroden 12 und 13 werden je nach Ansteuerung seine Elemente durch die Lichtquelle 15 erleuchtet.

**Patentansprüche**

1. Anzeigevorrichtung zur Darstellung von veränderlichen und festen Informationen, insbesondere Flüssigkristallzelle, mit zwei zwischen sich eine Kammer (3) bildenden Trägerplatten (1, 2), wobei in der Kammer (3) ein zwischen optisch verschiedenen Zuständen schaltbares Medium angeordnet ist, mit im Bereich der festen Informationen zwischen den Trägerplatten (1, 2) angeordneten transparenten Elementen (14) sowie einer auf der einem Beobachter abgewandten Seite der Zelle angeordneten Lichtquelle (15), wobei die veränderlichen Informationen helle Informationen in dunklem Umfeld sind und die Beobachterseite der Zelle mit einer lichtundurchlässigen Schicht (8) versehen ist, die im Bereich der festen und veränderlichen Informationen Aussparungen (9, 10) aufweist, dadurch gekennzeichnet, daß auf den der Kammer (3) abgewandten Seiten der Trägerplatten (1, 2) Polarisatoren (5, 6) angeordnet sind und daß auf dem beobachterseitigen Polarisator (5) der Zelle im Bereich der Aussparungen (10) der festen Informationen eine eine Vergleichmäßigung des Leuchtens bewirkende transparente Schicht (7) angeordnet ist.

2. Anzeigevorrichtung nach Anspruch 1, dadurch gekennzeichnet, daß die transparente Schicht eine transflektive Schicht (7) ist.

3. Anzeigevorrichtung nach einem der vorhergehenden Ansprüche, dadurch gekennzeichnet, daß im Bereich der festen Informationen eine Vielzahl transparenter Elemente geringer Größe angeordnet sind, zwischen denen sich optisch schaltbares Medium befindet.

4. Anzeigevorrichtung nach Anspruch 3, dadurch gekennzeichnet, daß die Elemente in Kleber (17) eingebundene, transparente Distanzelemente (14) sind.

5. Anzeigevorrichtung nach Anspruch 4, dadurch gekennzeichnet, daß die Distanzelemente (14) Kugeln oder Fasern aus Glas sind.

6. Anzeigevorrichtung nach Anspruch 4, dadurch gekennzeichnet, daß die transparenten Distanzelemente (14) außerhalb der Bereiche der veränderlichen Informationen in der ganzen Kammer (3) verteilt angeordnet sind.

7. Anzeigevorrichtung nach Anspruch 6, dadurch gekennzeichnet, daß die transparenten Distanzelemente (14) rasterartig über die Ebene der Kammer (3) verteilt angeordnet sind.

8. Anzeigevorrichtung nach Anspruch 7, dadurch gekennzeichnet, daß die transparenten Distanzelemente (14) in einem Druckverfahren auf eine der Trägerplatten (1 bzw. 2) aufgebracht sind.

**Claims**

1. An indicating device for the representation of variable and fixed information, especially a liquid crystal cell, having two substrates (1, 2) forming between them a compartment (3), a medium that can be switched between optically different modes being arranged in the compartment (3), and having transparent elements (14) arranged between the substrates (1, 2) in the area of the fixed information and a light source (15) arranged on the far side of the cell from an observer, the variable information being light information on a dark surround and the viewing side of the cell being provided with an opaque film (8) that is provided with recesses (9, 10) in the area of the fixed and variable information, characterised by arranging polarizers (5, 6) on the far sides of the substrates (1, 2) from the compartment (3) and by disposing on the viewing-side polarizer (5) of the cell in the area of the recesses (10) of the fixed information a transparent film (7) that renders the illumination even.

2. The indicating device according to Claim 1, characterised in that the transparent film is a transflective film (7).

3. The indicating device according to either of the preceding Claims, characterised in that in the area of the fixed information there are arranged a large number of transparent elements of small size between which there is optically switchable medium.

4. The indicating device according to Claim 3, characterised in that the elements are transparent spacing elements (14) bonded in cement (17).

5. The indicating device according to Claim 4, characterised in that the spacing elements (14) are beads or fibres of glass.

6. The indicating device according to Claim 4, characterised in that the transparent spacing elements (14) are distributed throughout the entire compartment (3) outside the areas of the variable information.

7. The indicating device according to Claim 6, characterised in that the transparent spacing elements (14) are distributed in a grid-like arrangement over the plane of the compartment (3).

8. The indicating device according to Claim 7, characterised in that the transparent spacing elements (14) are put onto one of the substrates (1 or 2) by the application of pressure.

**Revendications**

1. Dispositif indicateur destiné à montrer des informations variables et des informations fixes, en particulier une cellule à cristaux liquides, comportant deux plaques support (1, 2) créant entre elles une chambre (3), un milieu commutable entre des états optiquement différents étant disposé dans la chambre (3), la cellule comportant, dans la zone correspondant aux informations fixes des éléments (14) transparents ou translucides disposés entre les plaques support (1, 2) ainsi qu'une source lumineuse (15) disposée du côté éloigné d'un observateur, les informations variables constituant des informations claires dans un fond foncé et le côté de la cellule tourné vers l'observateur comportant une couche (8) opaque qui présente des évidements (9, 10) dans la zone des informations fixes et des informations variables, dispositif caractérisé en ce que des polariseurs (5, 6) sont disposés sur les côtés des plaques support (1, 2) éloignés de la chambre (3) et en ce qu'une couche (7) transparente, à rôle de diffusion pour égaliser l'éclairement, est disposée sur le polariseur (7), du côté observateur, de la cellule dans la zone des évidements (10) correspondant aux informations fixes.

2. Dispositif indicateur selon la revendication 1, caractérisé en ce que la couche transparente et diffusante est une couche (7) parfaitement transparente.

3. Dispositif indicateur selon l'une des revendications précédentes, caractérisé en ce que, dans la zone des informations fixes, sont disposés un grand nombre d'éléments transparents ou translucides de faible grandeur, entre lesquels il y a un milieu optiquement commutable.

4. Dispositif indicateur selon la revendication 3, caractérisé en ce que les éléments sont des entretoises (14) transparentes ou translucides enrobées dans de la colle (17).

5. Dispositif indicateur selon la revendication 4, caractérisé en ce que les entretoises (14) sont des billes ou des fibres de verre.

6. Dispositif indicateur selon la revendication 4, caractérisé en ce que les entretoises (14) transparentes sont réparties dans la totalité de la chambre (3) à l'extérieur des zones correspondant aux informations variables.

7. Dispositif indicateur selon la revendication 6, caractérisé en ce que les entretoises (14) sont réparties en réseaux ou trames à la surface de la chambre (3).

8. Dispositif indicateur selon la revendication 7, caractérisé en ce que les entretoises transparentes (14) sont appliquées par un procédé d'impression sur l'une des plaques support (1 ou 2).

FIG. 1

FIG. 2